# EUROPEAN PATENT SPECIFICATION

(11) **EP 2 708 471 B1**
(45) Date of publication and mention of the grant of the patent: **23.12.2015**
(21) Application number: 13183766.8
(22) Date of filing: 10.09.2013
(51) Int. Cl.: B65D 30/22, B65D 33/25, B65D 81/22

(54) **Bag for the breading of foods and relative method of production**
Beutel zur Panierung von Lebensmitteln und entsprechendes Herstellungsverfahren
Sac destiné à la culture d'aliments et procédé de production associé

(30) Priority: 14.09.2012 IT MI20121523
(43) Date of publication of application: 19.03.2014
(73) Proprietor: Solderplast di Risiglione Salvatore, 20017 Rho (MI) (IT)
(72) Inventor: Pompilio, Oreste Salvatore, 20017 Rho (Milano) (IT)
(74) Representative: Petruzziello, Aldo

(56) References cited:
- EP-A2- 0 255 780
- WO-A1-2010/089634
- AU-A- 199 897 029
- US-A1- 2007 086 683
- US-A1- 2009 202 288

## Description

The object of the present invention is a bag for the breading of foods and the relative method of production.

More particularly the present invention relates to a bag for the breading of foods of the meat, fish and vegetables type and the like to be subjected to subsequent cooking in a pan, dish or oven.

As is known, various cooking recipes require that some food be breaded prior to the phase of cooking. One typical example is represented by meat (for example the well-known cutlet) which can be dipped in flour or in breadcrumbs with the addition of optional spices and/or flavourings before placing it in the food or pan for subsequent cooking.

Another typical example comes from the frying of fish such as shrimps, squid, etc. which require breading before being fried.

The operation of breading is typically performed manually by taking the food or the foods with the hands and passing it/them once or several times in a plate or bowl containing a suitable quantity of flour or breadcrumbs.

However this operation is not free from some important disadvantages.

The operation of breading, in fact, requires the placing on a worktop of one or more bowls or plates containing the flour or the breadcrumbs and/or other optional ingredients and one or more plates whereon the foods to be breaded are placed and optional additional plates whereon the breaded foods are placed before proceeding with cooking of the same. As can be seen, such an operation requires sufficient space in order to be able to arrange these plates and needs, subsequently, an operation of cleaning of said plates or bowls used in addition to the hands of the person who has carried out breading.

Moreover, taking account of the fact that it is necessary to take the food to be breaded with the hands and, again with the hands, dip it in the breading, there is a tendency to soil not only the worktop but also the floor and/or cooker or clothes.

In order to avoid these disadvantages the operation of breading can be performed using a bag of paper or of plastic inside whereof flour or breadcrumbs and the product to be breaded are inserted. Subsequently the bag is closed and shaken/agitated vigorously.

However this method of performance of the operation of breading is also not free from some disadvantages.

One disadvantage is represented by the fact that the food is always in contact with the product for breading and, consequently, has to be shaken in order to remove the surplus breading. This operation may entail again the disadvantages mentioned above.

A further disadvantage is represented by the fact that the bag, since it is a common bag of paper or plastic with different original use, could tear in that not strictly suitable for this operation.

Other solutions of manufacture, for example the one described in US2009/0202288, refer to a container for covering material, which can also be used for the breading of foods, inside whereof an additional/separator element is attached, suitable for defining two distinct and separate chambers inside the same container and having the function of sieve in order to allow the passage of a product for breading from one chamber to the other. However, this solution also has some important disadvantages linked to the complex process of manufacture and, in particular, to the method of attachment of the sieve element inside the container itself, an operation which requires long process times with consequent high costs of production and, moreover, this type of container entails the risk that the breading product can be released from the same container when the breaded product is extracted from the container for the subsequent cooking. Another traditional solution is disclosed in EP0255780, which refers to a method for preparing a mixture of powered or granular solid material and adding a liquid to the mixture using a bag of flexible material provided with a mouth and an opening including a non-return valve, said bag comprising a folded material which is inserted between the open side edges of the plastic material which define the bag and sealed to the same in correspondence of said edges, the folded material having the function of defining a tubular compartment for the passage of liquid fed through the valve and allowing the liquid to pass in the bag

The object of the present invention is that of avoiding the disadvantages mentioned above. above.

More particularly, the object of the present invention is that of providing a bag for the breading of foods which does not cause the soiling of the hands and/or of the clothes of the person or of floors, worktop, cookers and plates or bowls.

A further object of the present invention is that of providing a bag for breading which is easy and convenient to use.

A further object of the present invention is that of providing a bag for breading suitable for guaranteeing a high degree of resistance and such, moreover, as to be able to be easily and economically manufactured.

These and other objects are achieved by a method according to claim 1 and a bag according to claim 3.

Advantageous embodiments of the invention are disclosed by the dependent claims. The constructional and functional features of the bag for breading of foods of the present invention and of the relative method of manufacture will be made clearer by the following detailed description, in which reference is made to the accompanying drawings which represent a preferred and non-limiting embodiment thereof, in which:
Figure 1 represents schematically an axonometric view of the bag for breading of foods of the present invention;
Figures 2 and 3 illustrate, by means of two schematic axonometric views, the method of use/functioning of the bag of the invention;
Figure 4 represents schematically a front view of the bag for breading of the present invention;
Figures 5 and 6 represent schematically two cross section views of the bag for breading of the invention, suitable for representing two steps of the process of manufacture of the same bag;
Figures 7 and 8 represent schematically and in a front view the bag for breading of the invention according to two different alternative embodiments.

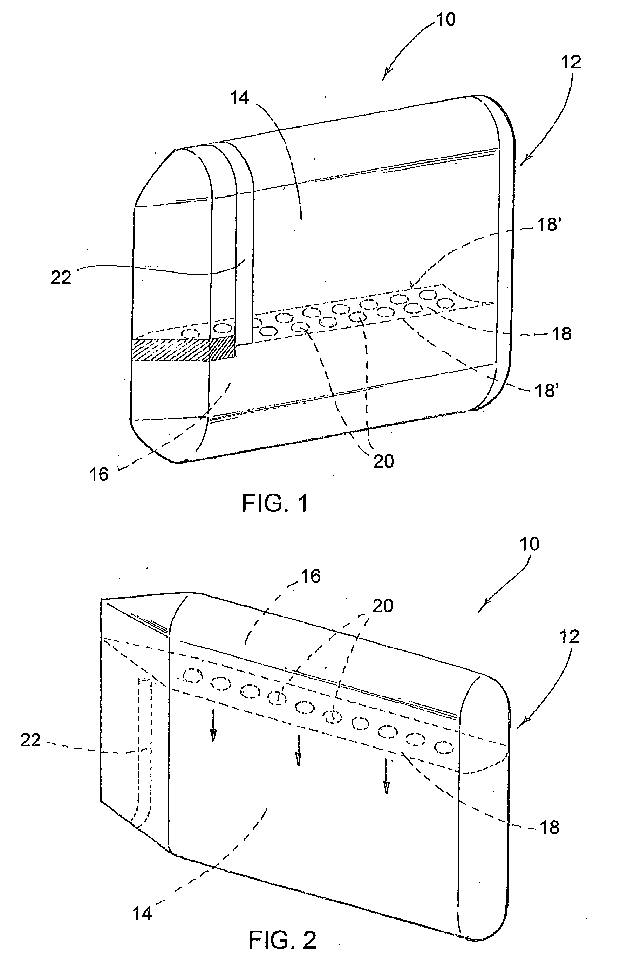

Referring initially to Figures 1 to 6, the bag for breading of foods of the present invention, denoted overall by 10 in the drawings, is defined by a casing 12 made in non-toxic plastic material and divided internally into a first chamber 14 and into a second chamber 16, longitudinally extended and separated by a membrane 18 extended along the entire longitudinal development of the casing 12, attached to the casing 12 by means of welding or suitable gluing along its longitudinal edges 18' according to the methods described here below.

Said membrane 18 has a plurality of holes or through openings 20, typically placed along at least one row and suitable for placing in communication the first and the second chamber in order to perform the function detailed here below.

The first chamber 14, tendentially larger with respect to the second chamber 16, is intended to accommodate the foods (not shown in the drawing) to be breaded, while the second chamber 16 contains the product for the breading (flour, breadcrumbs or the like).

The casing 12 of the bag 10 comprises, moreover, a self-adhesive strip 22 placed transversely and externally at the first chamber 14 and suitable for allowing the closure thereof for folding of the flap after the insertion of the food and of the product for the breading according to the methods described here below.

In an alternative embodiment the self-adhesive strip 22 can be replaced by a pair of opposite plastic bands placed inside the bag for a snap or zip closure.

Between the outer edge and the self-adhesive strip 22 of the first chamber 14 a line of pre-incisions 41 is likewise provided, suitable for facilitating the opening of this chamber.

The casing 12 of the bag 10 is, moreover, provided with a welded portion 26 placed and partially extended in longitudinal direction at a line of separation between the first and the second chamber and a pre-cut 28 at the welded portion 26 with extension corresponding to that of said welded portion, suitable for dividing partially the first chamber 14 from the second chamber 16 in order to facilitate the operations of opening, filling, closure and emptying of the bag, preventing, in particular, that in the phase of opening the tearing of the casing 12 spreads beyond the first chamber 14.

The operation of breading using the bag of the invention takes place according to the methods described here below.

The bag, initially completely sealed for hygiene reasons, is open/cut along the line of pre-incisions 41 and, in particular, for a section corresponding to the height of the first chamber 14 (the pre-cut 28 allows the easy opening of only the first chamber allowing the second chamber to be kept sealed) in order to allow the introduction of the breading product and, subsequently, a suitable quantity of food to be breaded. Specifically the product for the breading is introduced initially in the first chamber 14 and, passing through the holes 20 of the membrane 18, accumulates in the second chamber 16.
Subsequently the food to be breaded is introduced into the first chamber 14 which is closed by means of the self-adhesive strip 22 or of the equivalent means of closure. The pre-cut 28, allowing the partial separation between the first and the second chamber, facilitates the closure of said first chamber.

In this first phase of use the bag is presented with the first chamber 14 placed above the second chamber 16.

The bag closed in this way is turned over, bringing the second chamber 16 upwards, and shaken vigorously in such a way as to encourage the simultaneous falling through gravity (as indicated by the arrows in Figure 2) of the product for breading through the holes or through openings 20 in the first chamber 14 and the mixing of said product for breading with the food contained in said first chamber 14.

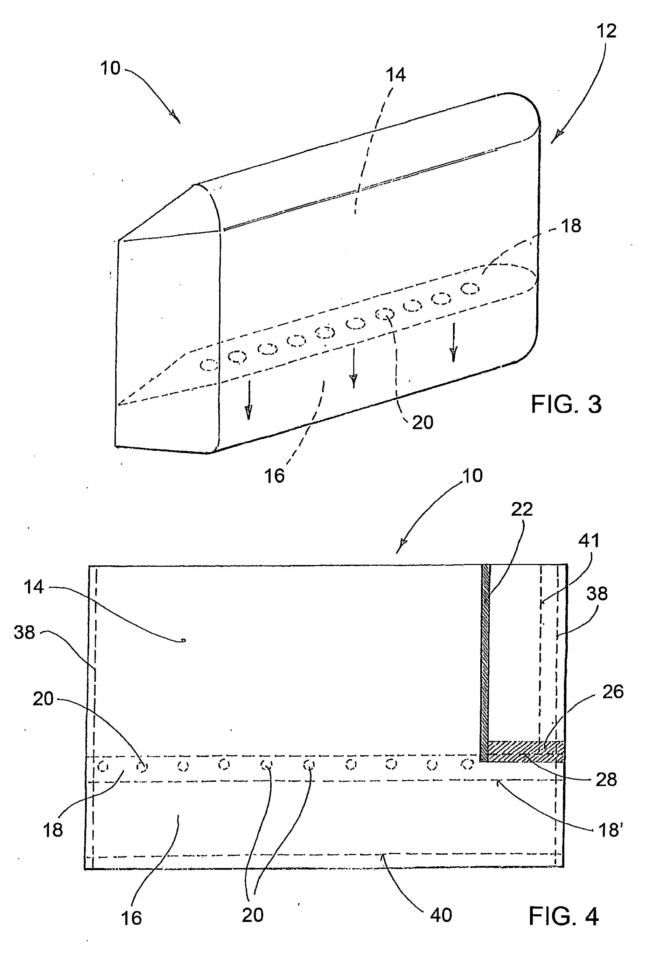

The operation or phase of breading having ended, the bag is once again turned over, returning the second chamber 16 downwards, and once again shaken in such a way as to encourage the falling through gravity (as indicated by the arrows in Figure 3) of the surplus breading product in said second chamber 16 through the holes or through openings 20.

This operation or phase having ended, the first chamber 14 is opened for the extraction of the breaded food and subsequently disposed of or, if necessary, used for one or more successive new operations of breading.

The bag 10 is obtained with an automated process starting from a first sheet 35 of non-toxic plastic material, transparent and optionally coloured, whereto a second sheet 36 is welded, having substantially the same longitudinal extension and lower height with respect to the first sheet, likewise in non-toxic plastic material and provided with a median portion wherein a plurality of holes or openings 20 are formed, arranged along at least one row and extending in longitudinal direction, with said portion suitable for defining the membrane 18 of separation between the first and the second chamber of the bag.

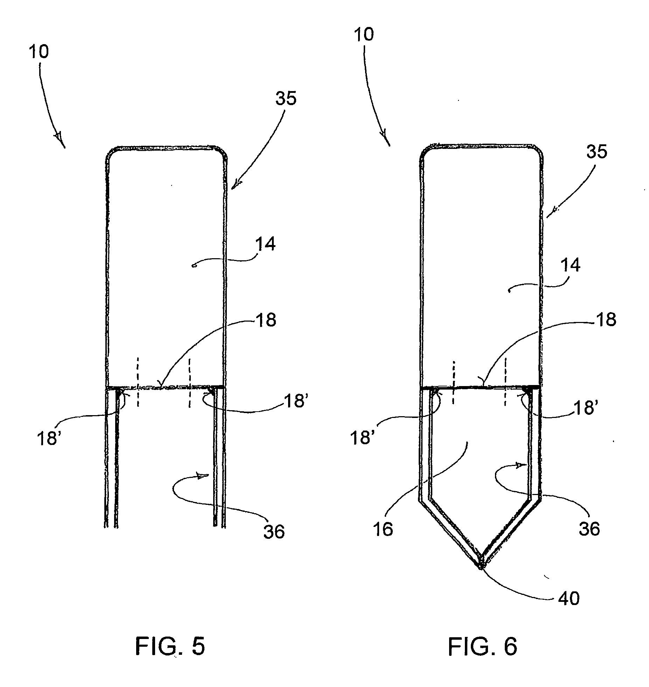

The first sheet is folded substantially as a book and the second sheet, also folded as a book, is inserted in said first sheet (as schematised in Figure 5) and welded to the same at the longitudinal edges 18' of its own perforated portion suitable for defining the membrane 18. Subsequently the first and the second sheet are welded one to the other at the side or end edges 38 and the bottom edge 40 (as schematised in Figures 4 and 6). In this way the first and the second chamber of the bag are formed and sealed, with the first chamber 14 which has a substantially double height with respect to that of the second chamber 16.

More particularly the first chamber 14 is with single wall defined by the first sheet 35, while the second chamber 16 is with double wall defined by the first sheet 35 and by the second sheet 36.

Finally the line of pre-incisions 41 can be formed.

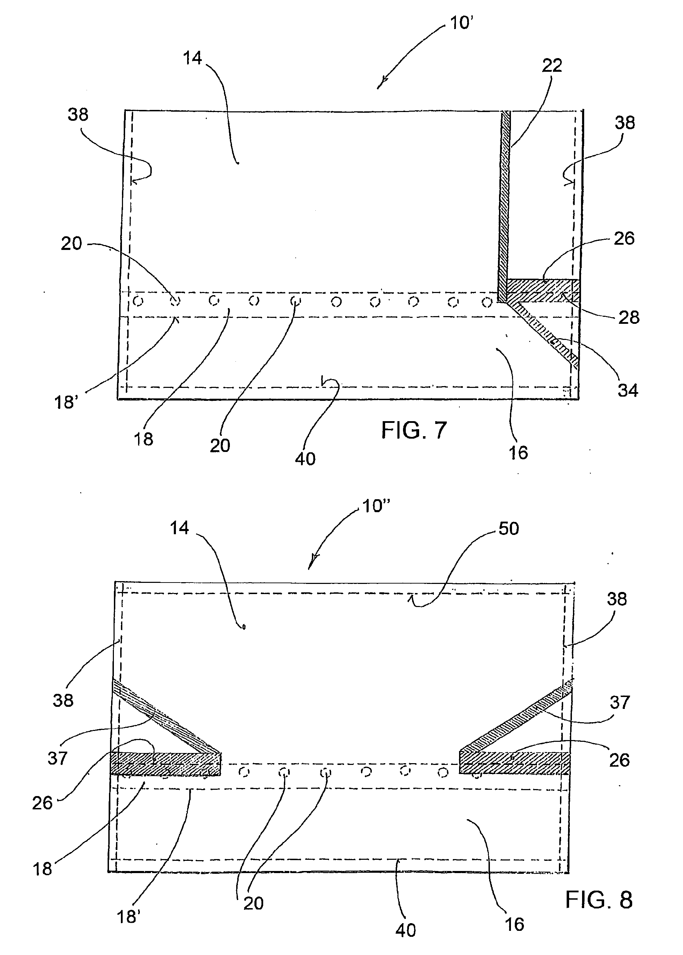

Figures 7 and 8 illustrate two alternative embodiment configurations of the bag of the invention.

Figure 7 illustrates a configuration of a bag 10' according to the invention, wherein there is an optional and additional welded portion 34 tendentially at 45° at the second chamber 16 starting from one of the side or end edges of said second chamber, on the same side with respect to the welded portion 26 and suitable for facilitating the release of the product for the breading for the operation of disposal of the bag after use.

Figure 8 illustrates an alternative configuration of the bag for breading of the invention, denoted overall by 10", wherein the first chamber 14 is provided with a closure 50 of the snap, zip or adhesive type or of another suitable and known type and applied at the upper portion with longitudinal development of said first chamber opposite the perforated membrane 18, while the second chamber 16 is closed by means of a weld made at the bottom edge 40. This bag is provided, at the line of separation between the first chamber 14 and the second chamber 16, with two opposite welded portions 26 and, likewise, two opposite and additional welded portions 37 tendentially at 45° formed at the first chamber 14 starting from the transverse end or side edges in the direction of the opposite welded portions 26. These welds have the function of facilitating the emptying of the bag, avoiding that the residual breading present in the second chamber, at the time of extraction of the breaded food, falls into the first chamber.

As can be seen from the above the advantages that the bag for breading of the invention achieves are clear.

The bag for breading of the present invention allows the operation of breading to be carried out while avoiding the soiling of the hands and/or of the clothes of the person/user or of floors, worktop, cookers and plates or bowls or the like.

Further advantageous is the fact that the bag of the invention allows the operation of breading to be carried out simply and easily.

Further advantageous is the fact that the bag for breading of the invention is simple and economical to make.

Although the invention has been described above with particular reference to its methods of manufacture given only by way of a non-limiting example, numerous changes and variations will appear clear to a person skilled in the art in light of what is disclosed above. The present invention therefore intends to embrace all the changes and variations which come within the scope of the following claims.

## Claims

1. A method for the manufacture of a bag for the breading of foods of the meat, fish and vegetables type and the like to be subjected to subsequent cooking in pan, dish or oven, comprising the steps of:
- folding as a book a first sheet (35) of non-toxic plastic material;
- forming a plurality of holes or openings (20) at a median portion of a second sheet (36) of non-toxic plastic material;
- inserting said second folded sheet (36) in said first folded sheet (35);
- welding said second sheet to said first sheet at longitudinal edges (18') of the median portion provided with holes or openings (20) of the second sheet (36);
- welding said first and second sheet at side edges (38) and a longitudinal edge (40) opposite to the folded edge of said first and second sheet so as to obtain a casing (12) with a first chamber (14) with single wall defined by said first sheet and a second chamber (16) with double wall defined by both said first sheet (35) and second sheet (36);
- applying auxiliary means of closure at least at said first chamber (14) in a longitudinal or transverse direction;
- forming one or two opposite welded potions (26) at a line of separation between the first chamber (14) and the second chamber (16), said welded portion being provided with a pre-cut (28) suitable for partially dividing said first chamber (14) from said second chamber (16) in order to facilitate the operations of opening, filing, emptying of the bag.

2. The method for the manufacture of a bag according to claims 1, **characterised in that** it comprises optional steps of formation of an additional welded portion (34) or of two additional opposite welded portions (37), tendentially at 45° and respectively formed at the second chamber (16) and first chamber (14) starting from one of the side or end edges of said chambers.

3. A bag for the breading of foods made according to the method as per at least one of claims 1 to 2, comprising a first sheet (35) and a second sheet (36) welded one to the other to define a casing (12) in non-toxic plastic material, sealed, transparent and/or coloured, comprising a first chamber (14) with single wall, defined by said first sheet (35), suitable for containing the food to be breaded, and a second chamber (16), with double wall, defined by both said first sheet (35) and second sheet (36), smaller than the first chamber (14) and suitable for containing a product for the breading, with said first and second chamber developed in a longitudinal direction and separated by a membrane (18) provided with a plurality of holes or openings (20) and formed by a median portion of said second sheet (36).

4. The bag for breading of foods according to claim 3, **characterised in that** it comprises means for the closure of said first chamber (14) and/or second chamber (16) prior to the operation of breading of the food and after the introduction of said food and/or product for breading in said first and second chamber, with said closure means arranged transversely to the longitudinal development of the bag and at the first chamber (14) or second chamber (16) or arranged along the longitudinal development of the bag at the upper portion of said first chamber (14).

5. The bag for breading of foods according to claim 4, **characterised in that** said closure means comprise a strip (22, 30) of self-adhesive material.

6. The bag for breading of foods according to claim 4, **characterised in that** said closure means comprise a pair of opposite plastic bands (50) for a snap or zip type closure.

7. The bag for breading according to any one of claims 3 to 6, **characterised in that** it comprises a further welded portion (34) tendentially at 45° and arranged at the second chamber (16), suitable for facilitating the release of the product for the breading.

8. The bag for breading according to any one of claims 3 to 6, **characterised in that** it comprises two opposite and additional welded portions (37) tendentially at 45° and arranged at the first chamber (14), suitable for facilitating the passage of the product for the breading in the second chamber (16).

## Patentansprüche

1. Verfahren zur Herstellung eines Beutels zur Panierung von Lebensmitteln des Fleisch-, Fisch- und Gemüsetyps und dergleichen, die der darauffolgenden Zubereitung in einer Pfanne, einer Form oder einem Ofen unterworfen werden, wobei das Verfahren die folgenden Schritte umfasst:
- Falten eines ersten Bogens (35) aus einem nicht-toxischen Kunststoffmaterial zu einem Buch;
- Bilden von mehreren Löchern oder Öffnungen (20) an einem mittleren Teil eines zweiten Bogens (36) aus einem nicht-toxischen Kunststoffmaterial;
- Einfügen des zweiten gefalteten Bogens (36) in den ersten gefalteten Bogen (35);
- Verschweißen des zweiten Bogens mit dem ersten Bogen an Längskanten (18') des mit Löchern oder Öffnungen (20) versehenen mittleren Teils des zweiten Bogens (36);
- Verschweißen des ersten und zweiten Bogens an Seitenkanten (38) und einer Längskante (40) entgegengesetzt zu der gefalteten Kante des ersten und zweiten Bogens, um so einen Kasten (12) mit einer ersten Kammer (14) mit einer durch den ersten Bogen definierten einfachen Wand und einer zweiten Kammer (16) mit einer durch sowohl den ersten Bogen (35) als auch den zweiten Bogen (36) definierten doppelten Wand zu erhalten;
- Aufbringen von Hilfsmitteln zum Verschließen mindestens an der ersten Kammer (14) in einer Längs- oder Querrichtung;
- Bilden von einem oder zwei entgegengesetzten verschweißten Teilen (26) an einer Trennlinie zwischen der ersten Kammer (14) und der zweiten Kammer (16), wobei der verschweißte Teil mit einer Vorstanzung (28) versehen ist, die zum teilweisen Trennen der ersten Kammer (14) von der zweiten Kammer (16) geeignet ist, um die Vorgänge des Öffnens, Füllens und Leerens des Beutels zu erleichtern.

2. Verfahren zur Herstellung eines Beutels nach Anspruch 1, **dadurch gekennzeichnet, dass** das Verfahren gegebenenfalls Schritte zur Bildung eines weiteren verschweißten Teils (34) oder von zwei weiteren entgegengesetzten verschweißten Teilen (37) umfasst, im Wesentlichen unter 45° und jeweils an der zweiten Kammer (16) und ersten Kammer (14) gebildet, beginnend an einer der Seiten- oder Endkanten der Kammern.

3. Beutel zur Panierung von Lebensmitteln, hergestellt nach dem Verfahren nach mindestens einem der Ansprüche 1 bis 2, welcher Folgendes umfasst: einen ersten Bogen (35) und einen zweiten Bogen (36), die miteinander verschweißt sind, um einen Kasten (12) aus einem nicht-toxischen Kunststoffmaterial zu bilden, der abgedichtet, transparent und/oder farbig ist, mit einer ersten Kammer (14) mit einer einfachen Wand, definiert durch den ersten Bogen (35), die zum Aufnehmen des zu panierenden Lebensmittels geeignet ist, und einer zweiten Kammer (16) mit einer doppelten Wand, definiert durch sowohl den ersten Bogen (35) als auch den zweiten Bogen (36), die kleiner als die erste Kammer (14) ist und zum Aufnehmen eines Produkts für die Panierung geeignet ist, wobei die erste und zweite Kammer in einer Längsrichtung ausgebildet und durch eine Membran (18) getrennt sind, die mit mehreren Löchern oder Öffnungen (20) versehen und durch einen mittleren Teil des zweiten Bogens (36) gebildet ist.

4. Beutel zur Panierung von Lebensmitteln nach Anspruch 3, **dadurch gekennzeichnet, dass** er Mittel zum Verschließen der ersten Kammer (14) und/oder zweiten Kammer (16) vor dem Vorgang des Panierens des Lebensmittels und nach dem Einbringen des Lebensmittels und/oder des Produkts für die Panierung in die erste und zweite Kammer umfasst, wobei die Mittel zum Verschließen quer zur Längsausdehnung des Beutels und an der ersten Kammer (14) oder der zweiten Kammer (16) angeordnet sind oder entlang der Längsausdehnung des Beutels am oberen Teil der ersten Kammer (14) angeordnet sind.

5. Beutel zur Panierung von Lebensmitteln nach Anspruch 4, **dadurch gekennzeichnet, dass** die Mittel zum Verschließen einen Streifen (22, 30) aus selbstklebendem Material aufweisen.

6. Beutel zur Panierung von Lebensmitteln nach Anspruch 4, **dadurch gekennzeichnet, dass** die Mittel zum Verschließen ein Paar von entgegengesetzten Kunststoffbändern (50) für einen Schnapp- oder Reißverschluss aufweisen.

7. Beutel zur Panierung nach einem der Ansprüche 3 bis 6, **dadurch gekennzeichnet, dass** er einen weiteren verschweißten Teil (34) aufweist, im Wesentlichen unter 45° und an der zweiten Kammer (16) gebildet, der geeignet ist, die Entnahme des Produkts für die Panierung zu erleichtern.

8. Beutel zur Panierung nach einem der Ansprüche 3 bis 6, **dadurch gekennzeichnet, dass** er zwei weitere entgegengesetzte verschweißte Teile (37) umfasst, im Wesentlichen unter 45° und an der ersten Kammer (14) gebildet, die geeignet sind, den Durchgang des Produkts für die Panierung in die zweite Kammer (16) zu erleichtern.

## Revendications

1. Procédé de fabrication d'une poche pour le panage d'aliments de type viande, poisson et similaires devant ensuite être cuits dans une poêle, un plat ou un four, comprenant les étapes consistant à :
- plier comme un livre une première feuille (35) de matière plastique non toxique ; pratiquer une pluralité de trous ou d'ouvertures (20) au niveau d'une partie médiane d'une seconde feuille (36) de matière plastique non toxique ;
- insérer ladite seconde feuille pliée (36) dans ladite première feuille pliée (35) ;
- souder ladite seconde feuille à ladite première feuille au niveau de bords longitudinaux (18') de la partie médiane pourvue de trous ou d'ouvertures (20) de la seconde feuille (36) ;
- souder lesdites première et seconde feuilles au niveau des bords longitudinaux (38) et d'un bord longitudinal (40) opposé au bord plié desdites première et seconde feuilles de manière à obtenir un compartiment (12) doté d'une première chambre (14) à simple paroi définie par ladite première feuille et d'une seconde chambre (16) à double paroi définie à la fois par la première feuille (35) et la seconde feuille (36) ;
- appliquer un moyen auxiliaire de fermeture au moins au niveau de ladite première chambre (14) dans un sens longitudinal transversal ;
- former une ou deux parties opposées soudées (26) au niveau d'une ligne de séparation entre la première chambre (14) et la seconde chambre(16), ladite partie soudée étant pourvue d'une pré découpe (28) apte à isoler partiellement ladite première chambre (14) de ladite seconde chambre (16) afin de faciliter les opérations d'ouverture, remplissage et vidage de la poche.

2. Procédé de fabrication d'une poche selon la revendication 1, **caractérisé en ce qu'**il comprend les étapes optionnelles de formage d'une partie soudée supplémentaire (34) ou de deux parties soudées opposées (37) orientées à 45° et formées respectivement au niveau de la seconde chambre (16) et de la première chambre (14) en partant d'un ou des deux bords terminaux desdites chambres.

3. Poche de panage d'aliments, réalisée selon le procédé selon au moins une des revendications 1 à 2, comprenant une première feuille (35) et une seconde feuille (36) soudées l'une à l'autre afin de définir un compartiment (12) en matière plastique non toxique, étanche, transparente et/ou colorée, comprenant une première chambre (14) dotée d'une simple paroi, définie par ladite première feuille (35), apte à contenir l'aliment à paner, et une seconde chambre (16) à double paroi définie à la fois par lesdites première (35) et seconde feuilles (36), plus petite que la première chambre (14) et apte à contenir un produit destiné à être pané, lesdites première et seconde chambres se développant dans un sens longitudinal et étant séparées par une membrane (18) pourvue d'une pluralité de trous ou d'ouvertures (20) et étant formée par une partie médiane de ladite seconde feuille (36).

4. Poche de panage d'aliments selon la revendication 3, **caractérisée en ce qu'**elle comprend un moyen de fermeture desdites première chambre (14) et/ou seconde chambre (16) avant l'opération de panage de l'aliment et après l'introduction dudit aliment et/ou produit à paner dans les dites premières et seconde chambres, ledit moyen de fermeture étant disposé transversalement à l'extension longitudinale de la poche et au niveau de la première chambre (14) ou seconde chambre (16) ou disposé le long de l'extension longitudinale de la poche au niveau de la partie supérieure de ladite première chambre (14).

5. Poche de panage d'aliments selon la revendication 4, **caractérisée en ce que** ledit moyen de fermeture comprend une bande (22, 30) de matériau auto-adhésif.

6. Poche de panage d'aliments selon la revendication 4, **caractérisée en ce que** ledit moyen de fermeture comprend une paire de bandes en plastique opposées (50) pour une fermeture de type à déclic ou zippée.

7. Poche de panage selon l'une quelconque des revendications 3 à 6, **caractérisée en ce qu'**elle comprend une autre partie soudée (34) orientée à 45° et disposée au niveau de la seconde chambre (16), apte à faciliter le détachement du produit pour le panage.

8. Poche de panage selon l'une quelconque des revendications 3 à 6, **caractérisée en ce qu'**elle comprend deux parties soudées opposées supplémentaires (37) orientées à 45° et disposées au niveau de la première chambre (14), aptes à faciliter le passage du produit à paner dans ,la seconde chambre (16).
